# EUROPEAN PATENT APPLICATION

(11) **EP 1 724 693 A1**
(43) Date of publication of application: **22.11.2006**
(21) Application number: 04788093.5
(22) Date of filing: 24.09.2004
(51) Int. Cl.: G06F 17/30, G09B 7/08, G09B 19/06

(54) **DATA EXTRACTION SUPPORTING SYSTEM**

(30) Priority: 02.02.2004 JP 2004025430
(71) Applicant: Quin Land Co., Ltd., Higashinada-ku Kobe-shi, Hyogo 658-0032 (JP)
(72) Inventor: YOSHIMURA, Kazuya, 6590014 (JP)
(74) Representative: Skuhra, Udo
(86) International application number: PCT/JP2004/013934
(87) International publication number: WO 2005/073877

(57) **Abstract**

[Problem to be Solved] To provide a data extraction supporting system and so on which focuses attention on repetitive behavior of a person to extract information that the person actually remembers or really wants.

[Solution] An extraction candidate data deciding/transmitting means 84 of a data extraction supporting device 4 decides extraction candidate data corresponding to history corresponding data for each user, reads the extraction candidate data from the information database 90 and transmits the extraction candidate data to a user terminal 6 on condition that the history corresponding data satisfies a transmission decision criterion. A history corresponding data updating means 86 receives information about whether or not the extraction candidate data transmitted to the user terminal 6 and displayed on the user terminal 6 were selected by the user and updates the history corresponding data based on the received information. An extraction data deciding means 88 decides extraction candidate data corresponding to the history corresponding data as extraction data for the user on condition that the updated history corresponding data satisfies a specific extraction decision criterion.

## Description

### [Technical Field]

This invention relates to a data extraction supporting system and so on.

### [Background Art]

A memory assisting method using achievement in the cerebrum physiology is known (see Patent Document 1, for example). In this method, multiplicity of images and textual data are sequentially displayed by repeatedly executing an image display step of displaying an image to be memorized or learned on the left-hand side of a display screen of a computer for a predetermined time period, and a text display step of displaying textual data of linguistic information related to the image displayed in the image display step on the right-hand side of the display screen of the computer for a predetermined time period to assist the memory or language learning using the computer.

It is said that this configuration allows memorizing activity which is not organized only in the left hemisphere or the right hemisphere of the brain and memorizing activity and language learning using both the right and left brains and both the conscious and subconscious minds. However, with this method, it cannot be checked whether or not the given information is remembered for a long period of time, that is, whether or not the given information is actually memorized.

It is known that there are short-term memory function, intermediate-term memory function, and long-term memory function as functions of human brain. Information memorized with the short-term memory function disappears in a short period of time. However, a review (rememorizing) before the disappearance can prevent the memorized information from disappearing. The information having escaped disappearance in a short period of time is memorized with the intermediate-term memory function.

The information memorized with the intermediate-term memory function lasts for a somewhat longer period of time than the memory holding time by a short-term memory function (intermediate period of time) but disappears eventually. Another review before the disappearance of the information retained by the intermediate-term memory function can prevent the information from disappearing. The information having escaped disappearance in an intermediate period of time is memorized with the long-term memory function. The information memorized with the long-term memory function lasts for quite a long period of time.

By promoting rememorizing with attention focused on such functions which enable a person to accomplish a purpose through repetitive behavior, it is possible to allow the person to memorize the given information more efficiently and to know the information the person actually remember. Similarly, by analyzing information selection behavior of a person with attention focused on attributes which can be known from repetitive behavior of the person, it is possible to know the information the person really wants.
[Patent Document 1] JP-A 2003-316245

### [Disclosure of the Invention]

It is an object of this invention to provide a data extraction supporting system and so on which focuses attention on repetitive behavior of a person to extract information the person actually remembers or really wants.

This invention relates to a data extraction supporting system, which is a system having: a plurality of user terminals each having a storage device, a display device, and an input device; and a server computer which can communicate with each user terminal through an information and communication network, characterized in that the server computer functions as a data extraction supporting device which can access an information database for storing user identification data for identifying the user using a user terminal, extraction candidate data, and history corresponding data corresponding to the history in which the extraction candidate data have been selected by the user in association with one another, and which has an extraction candidate data deciding/transmitting means which decides extraction candidate data corresponding to the history corresponding data for each user, reads the extraction candidate data from the information database, and transmits the extraction candidate data to a corresponding user terminal on condition that the history corresponding data satisfies a specific transmission decision criterion; a history corresponding data updating means which receives information about whether or not the extraction candidate data transmitted to the user terminal by the extraction candidate data deciding/transmitting means and displayed on the display device of the user terminal were selected by the user, and updates the history corresponding data in the information database based on the received information; and an extraction data deciding means which decides the extraction candidate data corresponding to the history corresponding data as extraction data for the user on condition that the history corresponding data updated by the history corresponding data updating means satisfies a specific extraction decision criterion.

This invention relates to a data extraction supporting device, which is a data extraction supporting device for use in a system having a plurality of user terminals each having a storage device, a display device, and an input device; and a data extraction supporting device which can communicate with each user terminal through an information and communication network, characterized in that the data extraction supporting device can access an information database for storing user identification data for identifying the user using a user terminal, extraction candidate data, and history corresponding data corresponding to the history in which the extraction candidate data have been selected by the user in association with one another, and has an extraction candidate data deciding/transmitting means which decides extraction candidate data corresponding to the history corresponding data for each user, reads the extraction candidate data from the information database, and transmits the extraction candidate data to a corresponding user terminal on condition that the history corresponding data satisfies a specific transmission decision criterion; a history corresponding data updating means which receives information about whether or not the extraction candidate data transmitted to the user terminal by the extraction candidate data deciding/transmitting means and displayed on the display device of the user terminal were selected by the user, and updates the history corresponding data in the information database based on the received information; and an extraction data deciding means which decides the extraction candidate data corresponding to the history corresponding data as extraction data for the user on condition that the history corresponding data updated by the history corresponding data updating means satisfies a specific extraction decision criterion.

This invention relates to a program for causing a server computer for use in a system having a plurality of user terminals each having a storage device, a display device and an input device, and a server computer which can communicate with each user terminal through an information and communication network to function as a data extraction supporting device which can access an information database for storing user identification data for identifying the user using a user terminal, extraction candidate data, and history corresponding data corresponding to the history in which the extraction candidate data have been selected by the user in association with one another, and which has an extraction candidate data deciding/transmitting means which decides extraction candidate data corresponding to the history corresponding data for each user, reads the extraction candidate data from the information database, and transmits the extraction candidate data to a corresponding user terminal on condition that the history corresponding data satisfies a specific transmission decision criterion; a history corresponding data updating means which receives information about whether or not the extraction candidate data transmitted to the user terminal by the extraction candidate data deciding/transmitting means and displayed on the display device of the user terminal were selected by the user, and updates the history corresponding data in the information database based on the received information; and an extraction data deciding means which decides the extraction candidate data corresponding to the history corresponding data as extraction data for the user on condition that the history corresponding data updated by the history corresponding data updating means satisfies a specific extraction decision criterion.

This invention relates to a data extraction supporting method, which is a data extraction supporting method which is carried out using a system having a plurality of user terminals each having a storage device, a display device, and an input device; and a server computer which can communicate with each user terminal through an information and communication network and which can access an information database for storing user identification data for identifying the user using a user terminal, extraction candidate data, and history corresponding data corresponding to the history in which the extraction candidate data have been selected by the user in association with one another, having: an extraction candidate data deciding/transmitting step of deciding extraction candidate data corresponding to the history corresponding data for each user, reading the extraction candidate data from the information database, and transmitting the extraction candidate data to a corresponding user terminal on condition that the history corresponding data satisfies a specific transmission decision criterion; a history corresponding data updating step of receiving information about whether or not the extraction candidate data transmitted to the user terminal in the extraction candidate data deciding/transmitting step and displayed on the display device of the user terminal were selected by the user, and updating the history corresponding data in the information database based on the received information; and an extraction data deciding step of deciding the extraction candidate data corresponding to the history corresponding data as extraction data for the user on condition that the history corresponding data updated in the history corresponding data updating step satisfies a specific extraction decision criterion.

Although the features of this invention can be expressed as above in a broad sense, the constitution and content of this invention, as well as the object and features thereof, will be apparent by reference to the following disclosure taken in connection with the accompanying drawings.

### [Brief Description of the Drawings]

FIG. 1 is a view illustrating the configuration of a data extraction supporting system 2 according to one embodiment of this invention.
FIG. 2 is a block diagram illustrating the configuration of a data extraction supporting device 4, a user terminal 6 and an administrator terminal 10 constituting the data extraction supporting system 2.
FIG. 3 is a block diagram for explaining the hardware configuration of the server computer 4, the user terminal 6 and the administrator terminal 10.
FIG. 4 is a flowchart showing one example of the flow of a memory learning assisting process.
FIG. 5 is a flowchart showing a part of the process shown in FIG. 4 in detail.
FIG. 6A to FIG. 6C are views for explaining one example of the data structure of a user master table 92.
FIG. 7 is a view for explaining one example of the data structure of a question master table 94.
FIG. 8A to FIG. 8E are views for explaining one example of the data structure of a question presentation control table 96.
FIG. 9A to FIG. 9 C are views for explaining one example of the data structure of a question result table 98.
FIG. 10 is a view for explaining the appearance of the display screen of an LCD 64 of the user terminal 6 during a memory learning assisting process.
FIG. 11A and FIG. 11B are views for explaining the appearance of the display screen of the LCD 64 of the user terminal 6 during the memory learning assisting process.
FIG. 12A to FIG. 12C are views for explaining the appearance of the display screen of the LCD 64 of the user terminal 6 during the memory learning assisting process.

### [Best Mode for Carrying Out the Invention]

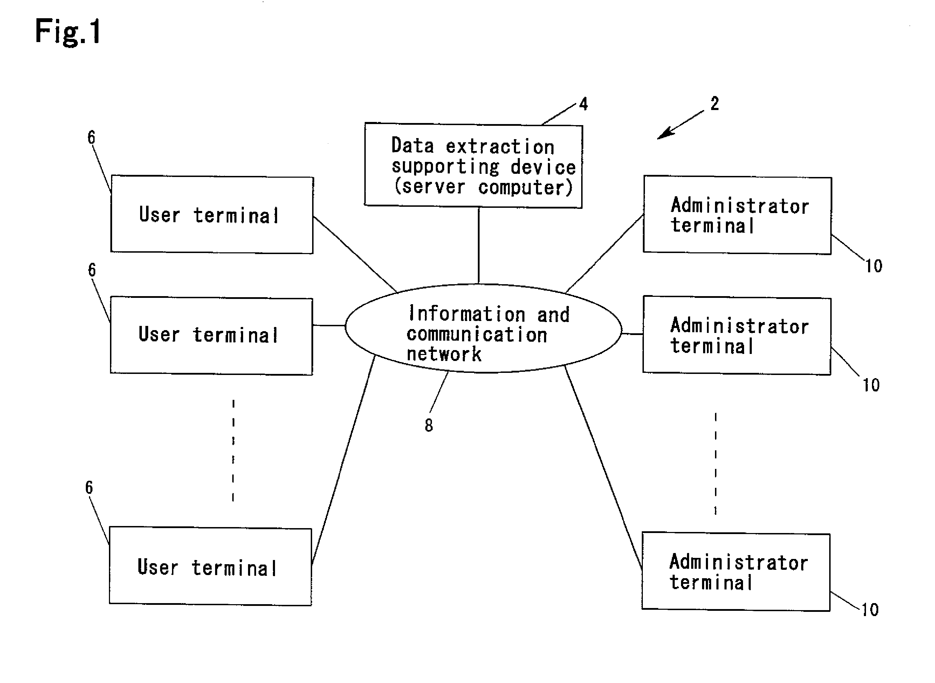

FIG. 1 is a view illustrating the configuration of a data extraction supporting system 2 according to one embodiment of this invention. In the data extraction supporting system 2, a data extraction supporting device 4 can communicate with a plurality of user terminals 6 and a plurality of administrator terminals 10 through an information and communication network 8.

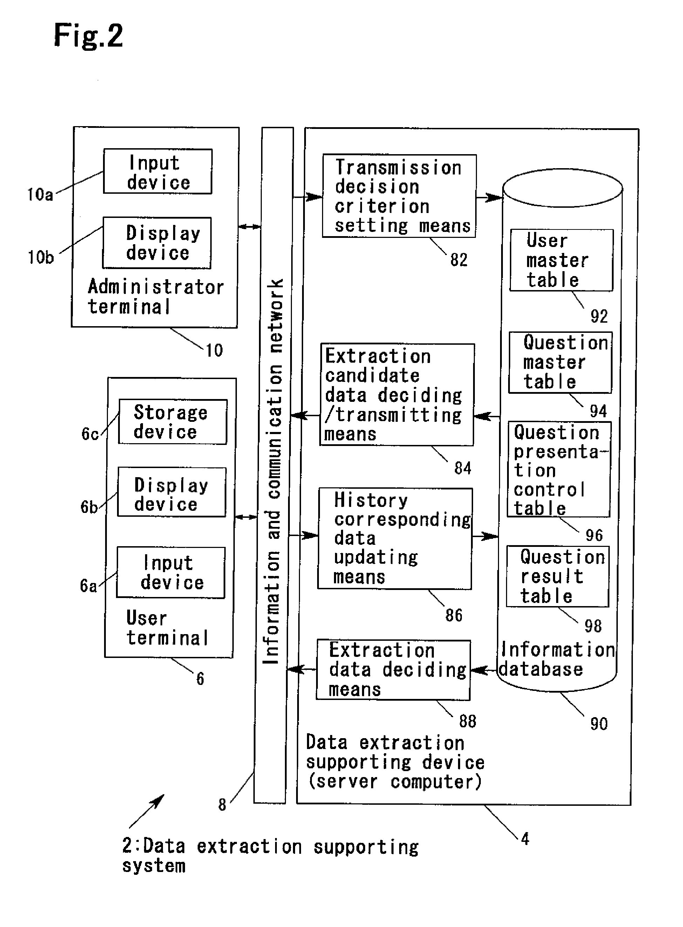

FIG. 2 is a block diagram illustrating the configuration of a data extraction supporting device 4, a user terminal 6 and an administrator terminal 10 constituting the data extraction supporting system 2. In this example, the data extraction supporting device 4 and the user terminal 6 communicate with each other through the information and communication network 8 every predetermined time period (one week, for example).

As shown in FIG. 2, the administrator terminal 10 has an input device 10a and a display device 10b. The user terminal 6 has an input device 6a, a display device 6b and a storage device 6c. The data extraction supporting device 4 has a transmission decision criterion setting means 82, an extraction candidate data deciding/transmitting means 84, a history corresponding data updating means 86, an extraction data deciding means 88, and an information database 90.

The information database 90 stores user identification data for identifying the user using the user terminal 6, extraction candidate data, and history corresponding data corresponding to the history in which the extraction candidate data have been selected by the user in association with one another.

The transmission decision criterion setting means 82 sets at least a part of transmission decision criterion based on transmission decision criterion directing data transmitted from the administrator terminal 10 and/or the user terminal 6.

The extraction candidate data deciding/transmitting means 84 decides extraction candidate data corresponding to the history corresponding data for each user, reads the extraction candidate data from the information database 90 and transmits the extraction candidate data to a corresponding user terminal 6 on condition that the history corresponding data satisfies a specific transmission decision criterion. In this example, the extraction candidate data deciding/transmitting means 84 reads extraction candidate data which satisfy the transmission decision criterion for a predetermined time period (one week, for example) collectively from the information database 90 and transmits the extraction candidate data to the user terminal 6.

The transmission decision criterion is not specifically limited. For example, the criterion may be equivalent to the condition that the extraction candidate data are undisplayed data which have never been displayed on the display device 6b of the user terminal 6 or previous time selected data which were selected by the user last time the data were displayed on the display device 6b of the user terminal 6. The transmission decision criterion may be set such that the period from the (i+1)-th to the (i+2)-th display on the display device 6b of the user terminal 6 is longer than the i-th to (i+1)-th display under the condition that 1 ≥ i ≥ n-2 (n ≥ 3).

The history corresponding data updating means 86 receives information about whether or not the extraction candidate data transmitted to the user terminal 6 by the extraction candidate data deciding/transmitting means 84 and displayed on the display device 6b of the user terminal 6 were selected by the user and updates the history corresponding data in the information database 90 based on the received information.

In this example, the history corresponding data updating means 86 receives information about whether or not the extraction candidate data transmitted to the user terminal 6 and displayed on the display device 6b of the user terminal 6 were selected by the user for a predetermined time period (one week, for example) collectively and updates the history corresponding data in the information database 90 based on the received information.

Also in this example, the history corresponding data updating means 86 changes the history corresponding data corresponding to the extraction candidate data to data which are dealt with in substantially the same way as undisplayed data when the extraction candidate data transmitted to the user terminal 6 by the extraction candidate data deciding/transmitting means 84 and displayed on the display device 6b of the user terminal 6 were not selected by the user.

The extraction data deciding means 88 decides extraction candidate data corresponding to the history corresponding data as extraction data for the user on condition that the history corresponding data updated by the history corresponding data updating means 86 satisfies a specific extraction decision criterion. The extraction decision criterion is not specifically limited. In this example, the extraction decision criterion is equivalent to the condition that the extraction candidate data displayed on the display device 6b of the user terminal 6 have been selected n times (n ≥ 3) in a row by the user.

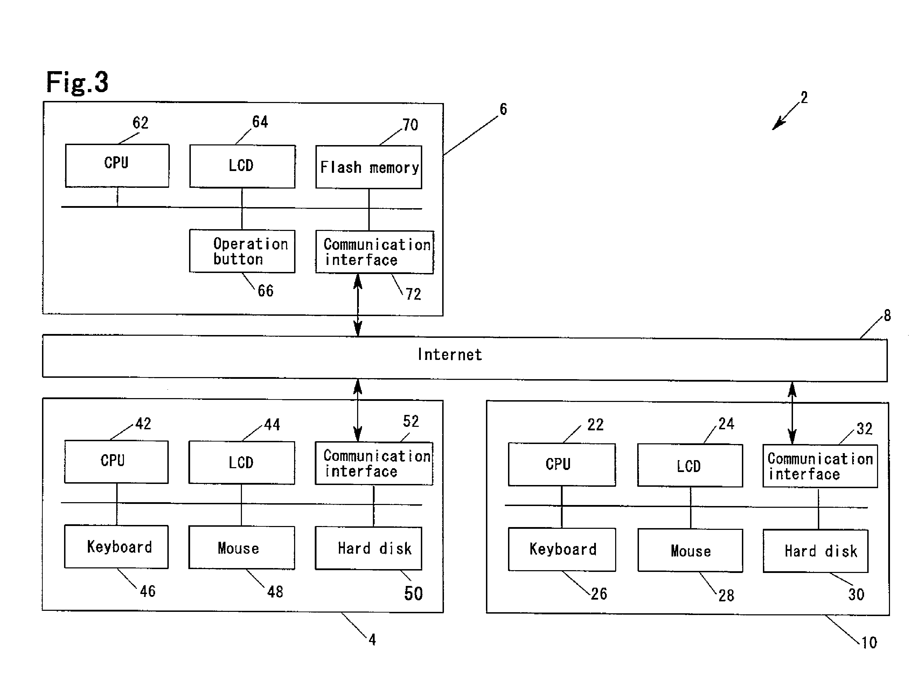

FIG. 3 to FIG. 12 are views for explaining one example in which the data extraction supporting system 2 is applied to a memory assisting process for assisting memorizing work of a person. Description is hereinafter made taking a memory assisting process (memory learning assisting process) for assisting work to memorize English words or the like as one example.

FIG. 3 is a block diagram for explaining the hardware configuration of a server computer 4 as the data extraction supporting device 4, the user terminal 6, and the administrator terminal 10.

The server computer 4 has a hard disk 50 as a storage device and a recording medium in which a program of this system is stored, a CPU 42 as a control means for loading the program stored in the hard disk 50 into a main memory (not shown) and executing it, an LCD (liquid crystal display device) 44 as a display device, a keyboard 46 and a mouse 48 as input devices, and a communication interface 52 for communicating with the user terminal 6, the administrator terminal 10 and so on through the Internet 8 as the information and communication network 8.

In this embodiment, the user terminal 6 is a cellular phone and has an LCD 64 as the display device 6b, an operation button 66 as the input device 6a, a flash memory 70 as a storage device in which an OS (operation system), a browsing program and so on are stored, a CPU 62 for loading the program or the like stored in the flash memory 70 into a main memory (not shown) and executing it, and a communication interface 72 for communicating with the server computer 4 through the Internet 8. It is needless to say that the user terminal 6 has a hardware configuration for realizing a function of a telephone but the illustration of the configuration is omitted in FIG. 3.

In this embodiment, when the user wants to use the memory learning assisting process, that is, the user wants to take a course using this system, the user has to access a program distribution server (not shown) from the user terminal 6 through the Internet 8 and download a user terminal 6 side program of this system into the flash memory 70 in advance.

The administrator terminal 10 has a hard disk 30 as a storage device for storing programs such as an OS, a CPU 22 as a control means for loading a program stored in the hard disk 30 into a main memory (not shown) and executing it, an LCD (liquid crystal display device) 24 as the display device 10b, a keyboard 26 and a mouse 28 as input devices 10a, and a communication interface 32 for communicating with the server computer 4 through the Internet 8.

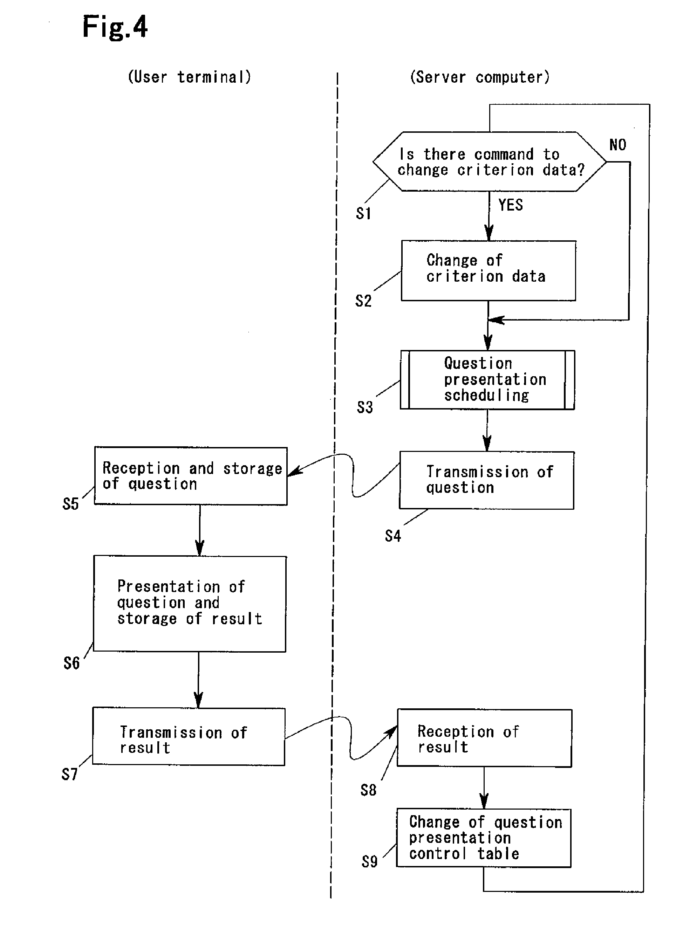

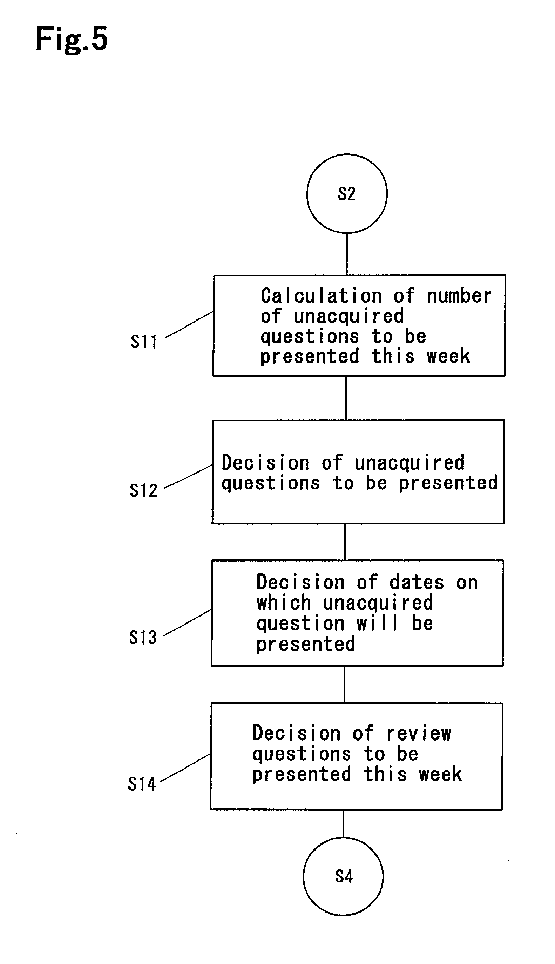

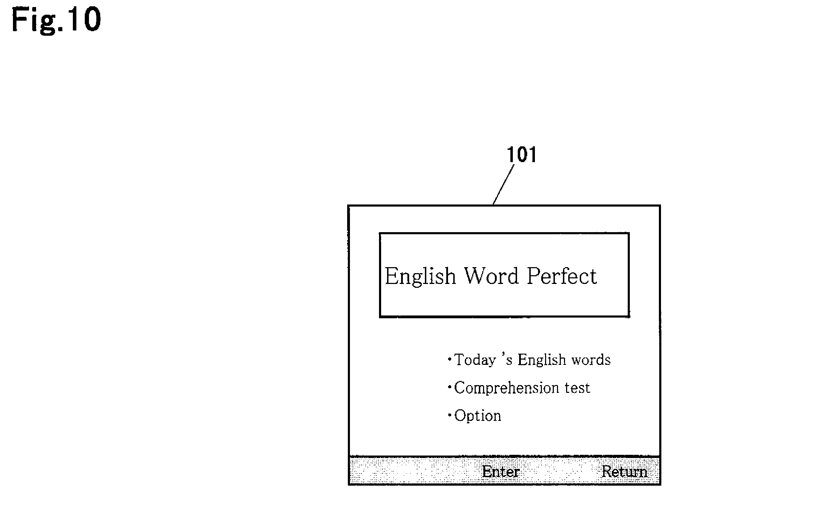

FIG. 4 is a flowchart showing one example of the flow of the memory learning assisting process. FIG. 5 is a flowchart showing a part of the process shown in FIG. 4 in detail. FIG. 10 to FIG. 12C are views for explaining the appearance of the display screen of the LCD 64 of the user terminal 6 during the memory learning assisting process.

In the memory learning assisting process, the information database 90 has a user master table 92, a question master table 94, a question presentation control table 96 and a question result table 98 as shown in FIG. 2.

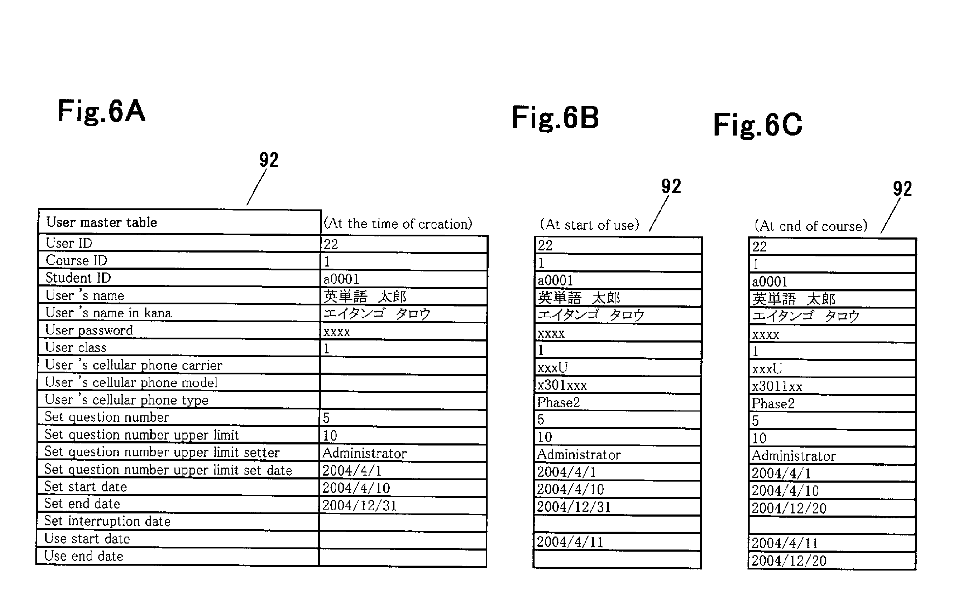

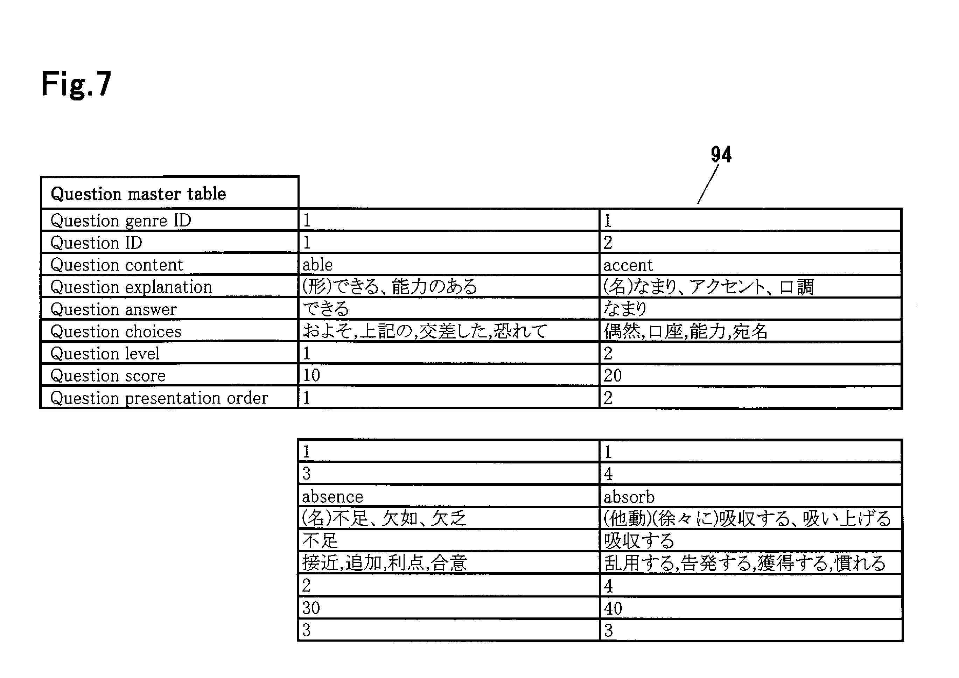

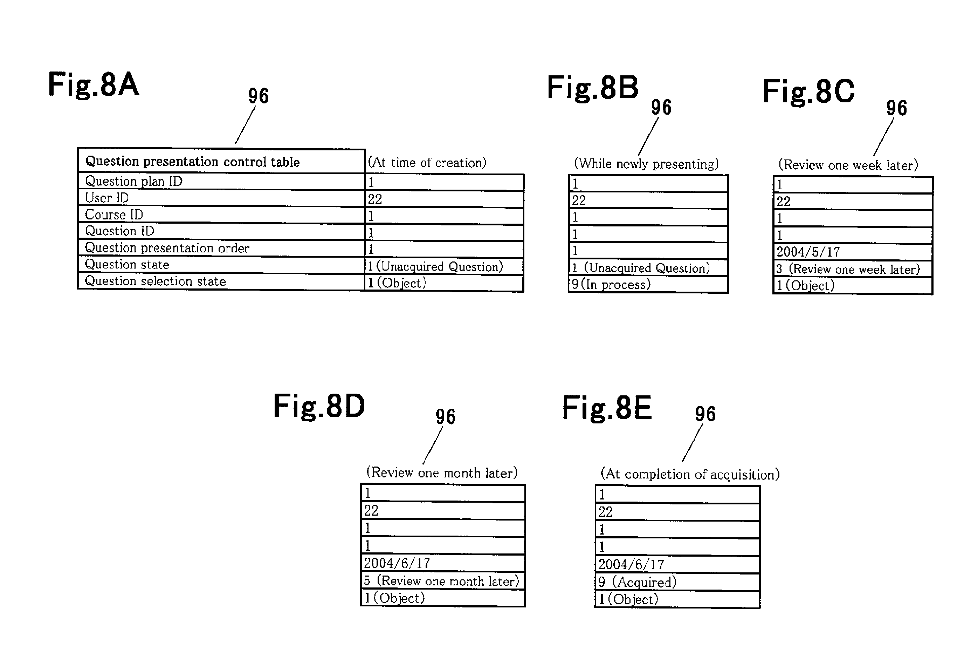

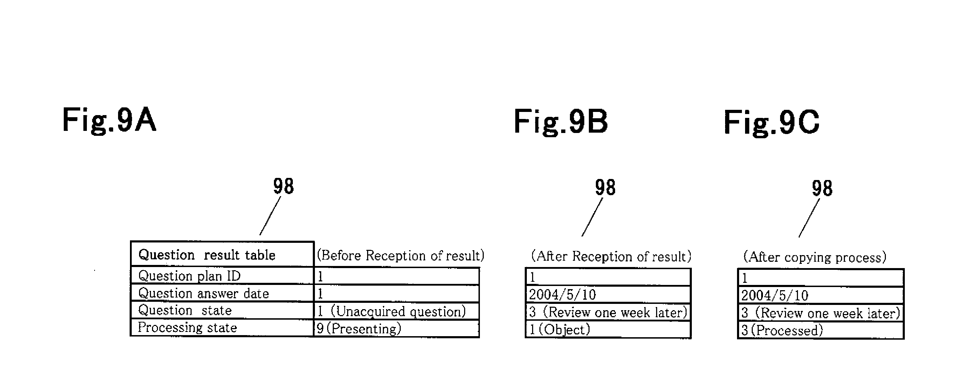

FIG. 6A to FIG. 6C are views for explaining one example of the data structure of a user master table 92. FIG. 7 is a view for explaining one example of the data structure of a question master table 94. FIG. 8A to FIG. 8E are views for explaining one example of the data structure of a question presentation control table 96. FIG. 9A to FIG. 9C are views for explaining one example of the data structure of a question result table 98.

As shown in FIG. 7, the question master table 94 is a table for storing questions as memorizing objects (presentation objects) and attributes thereof, and has fields of "Question genre ID" for identifying the genre of the question (English words, years in history, etc.), "Question ID" for identifying the question, "Question content" representing the content of the question, "Question explanation" representing the explanation for the question, "Question answer" representing the answer at the time of the presentation of the question, "Question choices" representing the choices for the answer at the time of the presentation of the question, "Question level" representing the level of the question, "Question score" representing the score for the question, "Question presentation order" representing the priority for the presentation of the question (smaller number represents higher priority), and so on. The individual questions stored in the question master table 94 correspond to the extraction candidate data.

FIGs. 6A, 6B and 6C are views illustrating one example of the contents in the user master table 92 at the time of creation of new record data (at the time of registration for the course), at the start of use (at the start of the course), and at the end of the course, respectively.

As shown in FIG. 6A, the user master table 92 is a table for storing the basic data of the course each user is taking, and has fields of "User ID" for identifying the user, "Course ID" for identifying the course the user is taking (course for first year high school students, course for second year high school students, etc.), "Student ID" representing the student number, "User's name" representing the name of the user, "User's name in kana" representing the name of the user written in katakana, "User password" representing the password of the user, "User class" representing the class to which the user belongs, "User's cellular phone carrier" representing the carrier of the user's cellular phone, "User's cellular phone model" representing the model of the user's cellular phone, "User's cellular phone type" representing the type of the user's cellular phone, "Set question number" representing the number of unacquired questions to be presented per day, "Set question number upper limit" representing the upper limit of the number of unacquired questions to be presented per day, "Set question number upper limit setter" representing the person who set the set question number upper limit, "Set question number upper limit set date" representing the date on which the set question number upper limit was set, "Set start date" representing the date on which the user plans to start the course, "Set end date" representing the data on which the user plans to finish the course, "Set interruption date" representing the date on which the user interrupts the course (which is displayed only during the interruption), "Use start date" representing the data on which the user actually started the course, "Use end date" representing the date on which the user actually finished the course, and so on.

As shown in FIG. 6B, the date in the fields of "User's cellular phone carrier," "User's cellular phone model," "User's cellular phone type" and "Use start date" are written at the actual start of use (when the user starts taking the course). Also, as shown in FIG. 6C, the data in the "Use end date" field are written at the actual end of use (when the user finishes the course). The content in the "User ID" field in the user master table 92 corresponds to the user identification data.

FIGs. 8A, 8B, 8C, 8D and 8E are views illustrating one example of the contents in the question presentation control table 96 at the time of creation of new record data (when the question is decided to be presented as an unacquired question), while a new question is being presented (while an unacquired question is being presented), at the time when the question is decided to be presented as a review question one week later, at the time when the question is decided to be presented as a review question one month later, and at the time of completion of acquisition, respectively.

As shown in FIG. 8A, the question presentation control table 96 is a table for managing the acquisition state and presentation state of each question for each user, and has fields of "Question plan ID," "User ID," "Course ID," and "Question ID" for identifying the combination between the user and the question, "Question presentation order" representing the presentation order of the question, "Question state" representing the acquisition state of the question, "Question selection state" representing the presentation state of the question, and so on.

In the "Question selection state" field, "1 (Object)" is shown when the question can be an object of a question presentation scheduling process as shown in FIGs. 8A, 8C, 8D and 8E and "9 (In process)" is shown while the question is being presented as shown in FIG. 8B.

In the "Question state" field, "1 (Unacquired question)" is shown when the question is in an unacquired state, that is, the question has not been presented or was answered wrong in any comprehension test as shown in FIGS. 8A and 8B. When a question answered wrong in any comprehension test is defined as "wrong answered question," a wrong answered question is dealt with in the same way as an unpresented question in the "Question state" field.

When the question is answered right in a comprehension test for unacquired questions, "3 (Review one week later)" is shown in the "Question state" field as shown in FIG. 8C. When the question is answered right in a comprehension test one week later, "5 (Review one month later)" is shown in the "Question state" field as shown in FIG. 8D. When the question is answered right in a comprehension test one month later, "9 (Acquired)" is shown in the "Question state" field as shown in FIG. 8E.

The content in the "Question state" field of the question presentation control table 96 corresponds to the history corresponding data. Also, unpresented questions correspond to undisplayed data, and questions other than unacquired questions correspond to previous time selected data. The questions answered right in the comprehension test one month later (final comprehension test) among the questions other than the unacquired questions correspond to the extraction data. Also, the criterion according to which the questions answered right in the comprehension test for the unacquired questions, the comprehension test one week later and the final comprehension test in succession are decided as extraction data corresponds to the extraction decision criterion.

In the "Question presentation order" field, "1" is shown when the question is in an unacquired state, that is, an unpresented question or a wrong answered question as shown in FIGs. 8A and 8B. In this case, when the question is decided to be presented as an unacquired question for this week, its presentation date and presentation order are decided at random. In the "Question presentation order" field, the date that is one week later than the date of the comprehension test is written when the question is answered right in a comprehension test for unacquired questions as shown in FIG. 8C. When the question is answered right in the comprehension test one week later, the date that is one month later than the date of the comprehension test is written. When the question is answered right in the comprehension test one month later, the date of the comprehension test is written.

The question presentation control table 96 is associated with the user master table 92 through the "User ID" field, and with the question master table 94 through the "Question ID" field.

FIGs. 9A, 9B and 9C are views illustrating one example of the contents in the question result table 98 before reception of answer result, after the reception of answer result, and after the process of copying the answer result into the question presentation control table 96 and so on, respectively.

As shown in FIG. 9A, the question result table 98 is a table for storing the result of comprehension test for each question for each user, and has fields of "Question plan ID," "Question answer date" representing the date on which the user made an answer to the comprehension test for the question, "Question state," and "processing state" representing the processing state of the question result and so on.

In the "Question answer date" field, "1" is shown when the question is an unpresented question as shown in FIG. 9A. In the case of a wrong answered question or review question, previous answer date is written. When the result of the comprehension test is received, the date on which the user answered to the comprehension test is written in the "Question answer date" field as shown in FIG. 9B.

In the "Question state" field of the question result table 98, the acquisition state of the question is written as in the case with the question presentation control table 96. In this example, it can be understood, from FIG. 9A, that an unacquired question was presented and, from FIG. 9B, that the question has became an object of the review question one week later as a result of the comprehension test. That is, it can be understood that the result of the comprehension test for this question was correct. If the result of the comprehension test for this question is wrong, the content of the "Question state" field in FIG. 9B is unchanged from "1 (Unacquired question)." The content in the "Question state" field of the question result table 98 corresponds to the information about whether or not the extraction candidate data displayed on the display device of the user terminal were selected by the user.

In the "processing state" field, "9 (Presenting)" is shown while the question is being presented and before the reception of answer result as shown in FIG. 9A. After the reception of answer result and before the process of copying the answer result into the question presentation control table 96 and so on, "1 (Object)" is shown as shown in FIG. 9B, and "3 (Processed)" is shown after the process of copying the answer result into the question presentation control table 96 and so on as shown in FIG. 9C.

The operation at the time when the data extraction supporting system 2 is used in a memory learning assisting process is next described based on FIG. 3 to FIG. 12C.

The CPU 42 of the server computer 4 shown in FIG. 3 monitors the presence or absence of a change command for criterion data as a base of question presentation scheduling as shown in FIG. 4, and changes the criterion data when there is a change command (step S1 and step S2).

The question presentation scheduling is automatically conducted based on the contents in the information database 90. The criterion about what kind of contents in the information database 90 about a certain question are necessary at the time of question presentation scheduling to decide transmission of the question to the user terminal 6 corresponds to the transmission decision criterion.

Therefore, the transmission decision criterion includes the standard number of unacquired questions to be presented per day and the upper limit of unacquired questions to be presented per day in addition to the criterion on the attributes of the question itself. The data regulating the standard number of unacquired questions to be presented per day and the upper limit of unacquired questions to be presented per day are referred to as "criterion data as the base of question presentation scheduling."

The standard number of unacquired questions to be presented per day and the upper limit of unacquired questions to be presented per day are decided based on the contents in the "Set question number" and "Set question number upper limit" fields, respectively, of the user master table 92. Also, as described later, the number of unacquired questions to be presented per day is calculated based on the content in the "Set end date" field. Therefore, the contents in these fields correspond to the criterion data as the base of question presentation scheduling.

Although default values are set for these fields, an command to change the contents in the "Set question number" or "Set end date" fields is given by the user through the user terminal 6 and the Internet 8 as needed and an command to change the contents in the "Set question number upper limit" field is given by the administrator (instructor in this example) through the administrator terminal 10 and the Internet 8 as needed. That is, the commands to change the contents in these fields correspond to the transmission decision criterion directing data.

The CPU 42 next performs question presentation scheduling (step S3). The process in step S3 is shown in detail in FIG. 5. In step S3, the CPU 42 first calculates the number of unacquired questions to be presented this week (step S11) as shown in FIG. 5.

The total number of unacquired questions in the questions decided based on the course the user is taking, question genre and so on is decided as the number of remaining questions, and the number obtained by dividing it by the number of remaining days for the course (set end date - today - one month) is decided as the number of unacquired question to be presented per day this week. When the calculated number of questions to be presented per day exceeds the set question number upper limit, the number set as the set question number upper limit is decided as the number of unacquired question to be presented per day. The number obtained by multiplying the number of questions to be presented per day by 7 is the number of questions to be presented this week.

The CPU 42 next decides the unacquired questions to be presented this week (step S12). In this embodiment, wrong answered questions do not exceed 1/2 of the unacquired questions to be presented this week.

That is, when the number of wrong answered questions to be presented this week is equal to or smaller than 1/2 of the number of unacquired questions to be presented this week, all the wrong answered questions and unpresented questions in number equal to the number obtained by subtracting the number of wrong answered questions from the number of unacquired questions to be presented this week are decided as the unacquired questions to be presented this week. The unpresented questions to be presented this week are selected in the order of descending priorities according to the "Question presentation order" field of the question master table 94.

When the number of wrong answered questions to be presented this week exceeds 1/2 of the number of unacquired questions to be presented this week, selection is made at random so that the number of wrong answered questions to be presented this week becomes equal to 1/2 of the number of the unacquired questions to be presented this week and unpresented questions in number equal to the number of the other 1/2 are selected according to the priorities.

The CPU 42 next decides the dates on which the unacquired questions to be presented this week will be presented (step S13). The presentation dates are assigned at random. The presentation order of the unacquired questions to be presented on the same day is also decided at random.

The CPU 42 next decides questions to be presented this week concerning review questions (step S14). The review questions to be presented this week are decided according to the description in the "Question presentation order" field of the question presentation control table 96. That is, review questions with a date in this week in the "Question presentation order" field of the question presentation control table 96 are decided as the review questions to be presented this week. The date on which a review question to be presented this week is the date written in the "Question presentation order" field of the question presentation control table 96.

Referring again to FIG. 4, when the question presentation scheduling is completed as described above, the CPU 42 reads the questions (unacquired questions and review questions) for one week decided in the question presentation scheduling from the question master table 94 in the information database 90, and transmits them to the user terminal 6 together with the question presentation scheduling result through the Internet 8 (step S4).

The user terminal 6 receives the questions for one week and question presentation scheduling result transmitted from the server computer 4 and stores them into the flash memory 70 (step S5).

The CPU 62 of the user terminal 6 presents questions every day of the week based on the received question presentation scheduling result and stores the answer results of the user successively in the flash memory 70 (step S6).

Based on FIG. 10 to FIG. 12C, the manner of learning in a day is described. When the user starts the user terminal 6 side program (user side application) of this system at the user terminal 6, a screen 101 shown in FIG. 10 is displayed on the LCD 64 of the user terminal 6.

On the screen 101, "Today's English Words," "Comprehension Test" or "Option" can be selected. When the user selects "Today's English Words," the user can learn unacquired questions assigned for today in the received questions for one week. When the user selects "Comprehension test," the user can undergo a test for unacquired questions and review questions assigned for today in the received questions for one week. The user can learn "Today's English Words" as many times as the user wants in the same day but can undergo the "Comprehension test" only once in the day.

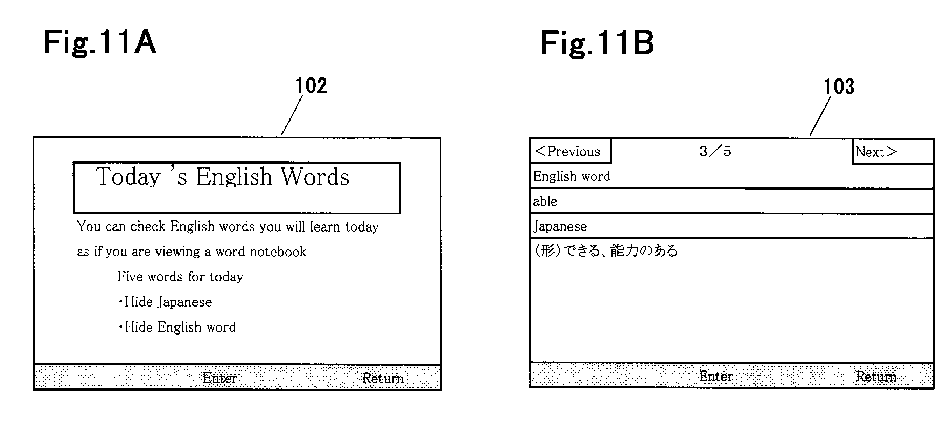

When the user selects "Today's English Words" on the screen 101 and presses the "Enter" button, a screen 102 shown in FIG. 11A is displayed. On the screen 102, either "Hide Japanese" or "Hide English Word" can be selected.

FIG. 11B is a view for explaining the appearance of the display screen at the time when "Hide Japanese" is selected. When "Hide Japanese" is selected on the screen 102 shown in FIG. 11A and the "Enter" button is pressed, the display screen is switched. Immediately after the switching, the section of the English word ("able" in this example) in a screen 103 shown in FIG. 11B is displayed but the section of Japanese ("□□□□□□□□□□□□" in this example) is hidden. When the "Enter" button is pressed in this state, the Japanese section is also displayed and the display screen turns into the screen 103 shown in FIG. 11B.

The screen 103 indicates that the third question among five unacquired questions (unacquired English words) to be learned today. To display the fourth question (next question), the "Next>" button at the upper-right corner in the screen is pressed. To display the second question (previous question), the "<Previous" button at the upper-left corner in the screen is pressed. When the "Return" button is pressed on the screen 103, the user can return to the screen 102.

When "Hide English Word" is selected on the screen 102 and the "Enter" button is pressed, the display screen is switched to the state in which the Japanese section is displayed and the English word section is hidden in the screen 103 shown in FIG. 11B. When the "Enter" button is pressed in this state, the English ward section is also displayed and the display screen turns into the screen 103 shown in FIG. 11B. The other operations are the same as those at the time when "Hide Japanese" is selected. When the "Return" button is pressed on the screen 102 shown in FIG. 11A, the display screen returns to the screen 101 shown in FIG. 10.

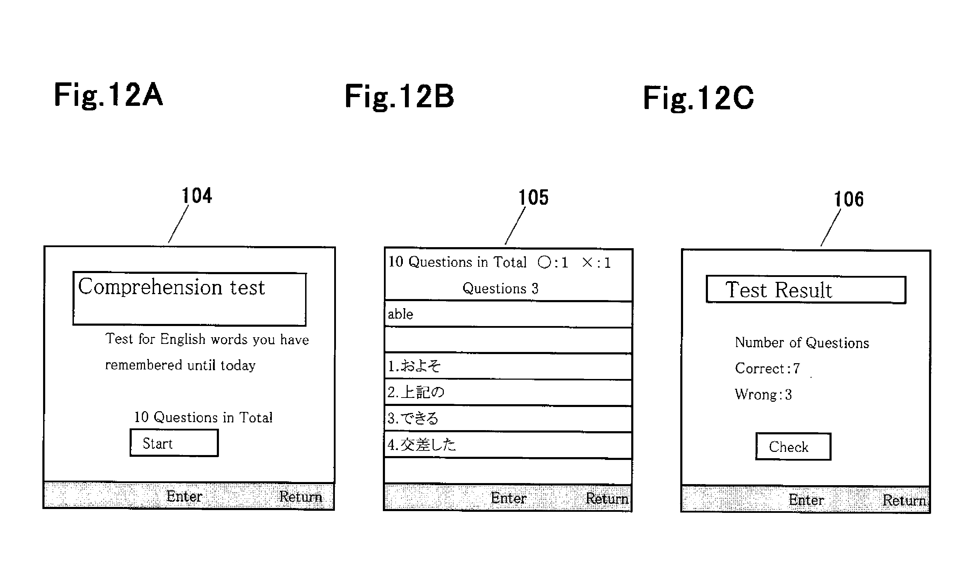

When "Comprehension test" is selected on the screen 101 shown in FIG. 10 and the "Enter" button is pressed, a screen 104 shown in FIG. 12A is displayed. When the "Enter" button is pressed on the screen 104, a comprehension test is started. FIG. 12B is a view for explaining the manner of a comprehension test. A screen 105 shown in FIG. 12B indicates that the third question of ten questions including the unacquired questions (5 questions in this example) learned today and review questions (5 questions in this example) assigned for today. At the upper-right corner of the screen 105, the number of questions answered right (displayed by "o") and the number of questions answered wrong (displayed by "x") up to the previous question are displayed.

On the screen 105, a question (English word) is displayed and a plurality of (four in this case) answer choices are also displayed. The answering to the question is made by selecting one of the answer choices and pressing the "Enter" button. When the answer is right, the fact is displayed and then the next question is automatically displayed. When the answer is wrong or not given within an answering time limit, the fact is displayed and the correct answer choice is highlighted. Then, the next question is automatically displayed. The display of a question and a plurality of answer choices corresponds to the display of extraction candidate data, and the action to select a right answer choice corresponds to the selection of extraction candidate data by the user.

When the user finishes all the questions of the comprehension test for today as described above, a screen 106 shown in FIG. 12C is displayed. The screen 106 is a screen for indicating the result of comprehension test for today, and the number of questions presented in the comprehension test for today, the number of questions answered right, and the number of questions answered wrong are displayed in the "Number of questions," "Correct" and "Wrong" columns, respectively.

The CPU 62 of the user terminal 6 allows the user to learn unacquired questions and conducts comprehension test for unacquired questions and review questions based on the received question presentation scheduling result for one week every day of the week and stores the test result in the flash memory 70 successively.

Referring again to FIG. 4, when the question presentation schedule for one week is completed, the user terminal 6 transmits the results of comprehension tests to the server computer 4 through the Internet 8 (step S7).

The CPU 42 of the server computer 4 receives the results of comprehension tests, and stores them in the question result table 98 of the information database 90 (step S8).

The CPU 42 next updates the question presentation control table 96 based on the question result table 98 (step S9).

That is, the process of copying the contents in the question result table 98 into the question presentation control table 96 and so on are performed. In this process of copying and so on, the content in the "Question state" field of the question result table 98 is copied as it is into the "Question state" field of the question presentation control table 96.

Also in this process of copying and so on, the content in the "Question presentation order" field of the question presentation control table 96 is updated according to the content in the "Question state" field of the question result table 98.

That is, when the content in the "Question state" field of the question result table 98 is "1 (Unacquired question)," "1" is written in the "Question presentation order" field of the question presentation control table 96, and when the content in the "Question state" field of the question result table 98 is other than "1 (Unacquired question)," data obtained by applying a specific operation to the content in the "Question answer date" field depending on the content in the "Question state" field of the question result table 98 are written in the "Question presentation order" field of the question presentation control table 96.

In this example, when the content in the "Question state" field of the question result table 98 is "3 (Review one week later)," date data obtained by adding "7 days" to the content (date data) in the "Question answer date" field of the question result table 98 are written in the "Question presentation order" field of the question presentation control table 96. When the content in the "Question state" field of the question result table 98 is "5 (Review one month later)," date data obtained by adding "1 month" to the date data in the "Question answer date" field of the question result table 98 are written in the "Question presentation order" field of the question presentation control table 96. When the content in the "Question state" field of the question result table 98 is "9 (Acquired)," the date data in the "Question answer date" field of the question result table 98 are copied as they are in the "Question presentation order" field of the question presentation control table 96.

Referring again to FIG. 4, when step S9 is completed as described above, the CPU 42 of the server computer 4 returns the control to step S1. The process from step S1 to step S9 is repeated as described above until the "Question state" field of the question presentation control table 96 for all the questions decided based on the course the user selected, the question genre and so on becomes "9 (Acquired)" or the date set in the "Set end date" field of the user master table 92 comes. The user can interrupt or restart the course in the middle of the course.

Step S1 and step S2 in FIG. 4 correspond to the transmission decision criterion setting means 82 in FIG. 2, step S3 and step S4 correspond to the extraction candidate data deciding/transmitting means 84 and an extraction candidate data deciding/transmitting step, and step S8 and step S9 correspond to the history corresponding data updating means 86 and extraction data deciding means 88, and a history corresponding data updating step and extraction data deciding step.

Although a system having a plurality of administrator terminals is described as one example in the above embodiment, this invention is applicable to a system having one administrator terminal.

Also, although the interval of communication between the data extraction supporting device and the user terminal is one week in the above embodiment, this invention is not limited to thereto. The interval of communication between the data extraction supporting device and the user terminal may be a period shorter than one week, for example, one day, or a period longer than one week, for example, one month. Also, an interval is not necessarily set for the communication between the data extraction supporting device and the user terminal. The data extraction supporting device and the user terminal may be connected when there is a need for communication or may be constantly connected.

Also, a case in which comprehension tests are conducted on the same day, one week later and one month later is described as one example in the above embodiment, the timing of comprehension tests are not limited thereto. For example, the first, second and third comprehension tests may be conducted on a day not later than one week from the same day, on a day after one week or more and not later than one month, and on a day after one month or more and not later than three month, respectively.

Although a question is decided as extraction data when the question is answered right in a row in three comprehension tests in the above embodiment, this invention is not limited thereto. For example, the question may be decided as extraction data on condition that a fourth comprehension test is conducted (after three months or more later) and the question is answered right in a row in the four comprehension tests. On the contrary, the question may be decided as extraction data on condition that the question is answered right in a row in two comprehension tests. Moreover, the question may be decided as extraction data when the percentage of the number of times the question is answered right in a plurality of comprehension tests exceeds a specific reference value. In this case, it is based on the premise that even if the question was not answered right in the previous comprehension test, the comprehension test for this time can be conducted.

Although the period from the (i+1)-th comprehension test to the (i+2)-th comprehension test is longer than the period from the i-th comprehension test to the (i+1)-th comprehension test in the above embodiment, this invention is not limited thereto. For example, the period from the i-th comprehension test to the (i+1)-th comprehension test may be equal to the period from the (i+1)-th comprehension test to the (i+2)-th comprehension test, or the period from the (i+1)-th comprehension test to the (i+2)-th comprehension test may be shorter than the period from the i-th comprehension test to the (i+1)-th comprehension test.

Also, a case in which the data extraction supporting system 2 is used for a memory learning assisting process for assisting memory learning for English words or the like is described as one example in the above embodiment, this invention is not limited thereto. The data extraction supporting system 2 is applicable to various types of memory assisting processes for assisting memorizing work of a person other than the memory learning assisting process. In addition, the data extraction supporting system 2 is applicable to any data extraction assisting process which focuses attention on a repetitive behavior of a person to extract information the person actually remember or really wants in addition to the memory assisting processes.

Although a cellular phone is taken as one example of the user terminal in the above embodiment, the user terminal is not limited to a cellular phone. As the user terminal, a portable information terminal i.e. a personal digital assistance, or a personal computer, for example, may be used.

Also, the above system configuration diagrams, block diagrams, hardware configurations, flowcharts, data structures, display screens and so on are provided as examples, and the present invention is not limited to the above system configuration diagrams, block diagrams, hardware configurations, flowcharts, data structures, display screens and so on.

Also, the number and type of the database are not specifically limited. The above database may be divided into a plurality of databases. Also, the number and type of the tables constituting the database are not specifically limited. The tables may be further divided or combined.

Also, although a case in which the data extraction supporting device and the administrator terminals are connected through an information and communication network is described as one example in the above embodiment, this invention is not limited thereto. For example, the data extraction supporting device and the administrator terminals may be directly connected or a device which serves as both a data extraction supporting device and an administrator terminal may be used.

Also, a plurality of computers may be separately disposed as the data extraction supporting device. In this case, the computers may be connected to each other through an information and communication network. Also, a plurality of computers may be separately disposed as the administrator terminals. In this case, the computers may be connected to each other via an information and communication network.

Although the Internet is taken as one example of the information and communication network in the above embodiment, the information and communication network is not limited to the Internet. For example, the present invention may be realized in a network to which a plurality of computers are connected via a LAN (local area network), WAN (wide area network) or an intranet.

In this embodiment, a program installed in a hard disk of the data extraction supporting device is executed as the program on the data extraction supporting device side. However, the program retention manner on the data extraction supporting device side is not limited thereto. For example, the program on the data extraction supporting device side may be stored in a CD-ROM, flexible disk, magnetic tape or the like.

In addition, the program on the data extraction supporting device side may be distributed through a wired or wireless information and communication network. The program on the data extraction supporting device side may be installed in a program distribution server (not shown) and a local computer may execute the program on the data extraction supporting device side through an information and communication network such as the Internet.

Also, although the program on the user terminal side is downloaded into the flash memory as a nonvolatile storage device of the user terminal from the program distribution server through an information and communication network at the beginning and the program is loaded from the nonvolatile storage device into the main memory and executed in the above embodiment, the manner of distribution of the program on the user terminal side is not limited thereto.

For example, the program on the user terminal side may be loaded every time prior to the execution from a program distribution server into the main memory of the user terminal through an information and communication network and deleted when the program is terminated. Also, the program on the user terminal side may be distributed in a recording medium such as a CD-ROM, flexible disk or magnetic tape.

The methods for storing or distributing the programs and data are not specifically limited. The programs and data may stored in a recording medium or distributed in a form which can be executed directly or may be stored in a recording medium or distributed in a compressed form which needs to be decompressed before use.

Although a case in which the functions shown in FIG. 2 are realized using a computer is described as one example in the above embodiment, some of the functions shown in FIG. 2 may be constituted using a hardware logic.

The data extraction supporting system according to this invention is a system having: a plurality of user terminals each having a storage device, a display device, and an input device; and a server computer which can communicate with each user terminal through an information and communication network, characterized in that the server computer functions as a data extraction supporting device which can access an information database for storing user identification data for identifying the user using a user terminal, extraction candidate data, and history corresponding data corresponding to the history in which the extraction candidate data have been selected by the user in association with one another, and which has an extraction candidate data deciding/transmitting means which decides extraction candidate data corresponding to the history corresponding data for each user, reads the extraction candidate data from the information database, and transmits the extraction candidate data to a corresponding user terminal on condition that the history corresponding data satisfies a specific transmission decision criterion; a history corresponding data updating means which receives information about whether or not the extraction candidate data transmitted to the user terminal by the extraction candidate data deciding/transmitting means and displayed on the display device of the user terminal were selected by the user, and updates the history corresponding data in the information database based on the received information; and an extraction data deciding means which decides the extraction candidate data corresponding to the history corresponding data as extraction data for the user on condition that the history corresponding data updated by the history corresponding data updating means satisfies a specific extraction decision criterion.

The data extraction supporting device according to this invention is a data extraction supporting device for use in a system having a plurality of user terminals each having a storage device, a display device, and an input device; and a data extraction supporting device which can communicate with each user terminal through an information and communication network, characterized in that the data extraction supporting device can access an information database for storing user identification data for identifying the user using a user terminal, extraction candidate data, and history corresponding data corresponding to the history in which the extraction candidate data have been selected by the user in association with one another, and has an extraction candidate data deciding/transmitting means which decides extraction candidate data corresponding to the history corresponding data for each user, reads the extraction candidate data from the information database, and transmits the extraction candidate data to a corresponding user terminal on condition that the history corresponding data satisfies a specific transmission decision criterion; a history corresponding data updating means which receives information about whether or not the extraction candidate data transmitted to the user terminal by the extraction candidate data deciding/transmitting means and displayed on the display device of the user terminal were selected by the user, and updates the history corresponding data in the information database based on the received information; and an extraction data deciding means which decides the extraction candidate data corresponding to the history corresponding data as extraction data for the user on condition that the history corresponding data updated by the history corresponding data updating means satisfies a specific extraction decision criterion.

The program according to this invention is a program for causing a server computer for use in a system having a plurality of user terminals each having a storage device, a display device and an input device, and a server computer which can communicate with each user terminal through an information and communication network to function as a data extraction supporting device which can access an information database for storing user identification data for identifying the user using a user terminal, extraction candidate data, and history corresponding data corresponding to the history in which the extraction candidate data have been selected by the user in association with one another, and which has an extraction candidate data deciding/transmitting means which decides extraction candidate data corresponding to the history corresponding data for each user, reads the extraction candidate data from the information database, and transmits the extraction candidate data to a corresponding user terminal on condition that the history corresponding data satisfies a specific transmission decision criterion; a history corresponding data updating means which receives information about whether or not the extraction candidate data transmitted to the user terminal by the extraction candidate data deciding/transmitting means and displayed on the display device of the user terminal were selected by the user, and updates the history corresponding data in the information database based on the received information; and an extraction data deciding means which decides the extraction candidate data corresponding to the history corresponding data as extraction data for the user on condition that the history corresponding data updated by the history corresponding data updating means satisfies a specific extraction decision criterion.

The recording medium according to this invention is a recording medium in which the program has been stored.

The data extraction supporting method according to this invention is a data extraction supporting method which is carried out using a system having a plurality of user terminals each having a storage device, a display device, and an input device; and a server computer which can communicate with each user terminal through an information and communication network and which can access an information database for storing user identification data for identifying the user using a user terminal, extraction candidate data, and history corresponding data corresponding to the history in which the extraction candidate data have been selected by the user in association with one another, having: an extraction candidate data deciding/transmitting step of deciding extraction candidate data corresponding to the history corresponding data for each user, reading the extraction candidate data from the information database, and transmitting the extraction candidate data to a corresponding user terminal on condition that the history corresponding data satisfies a specific transmission decision criterion; a history corresponding data updating step of receiving information about whether or not the extraction candidate data transmitted to the user terminal in the extraction candidate data deciding/transmitting step and displayed on the display device of the user terminal were selected by the user, and updating the history corresponding data in the information database based on the received information; and an extraction data deciding step of deciding the extraction candidate data corresponding to the history corresponding data as extraction data for the user on condition that the history corresponding data updated in the history corresponding data updating step satisfies a specific extraction decision criterion.

Therefore, in the system, the device, the program, the recording medium in which the program has been stored, and the method according to this invention, attention is focused on the history corresponding data corresponding to the history in which the extraction candidate data have been selected by the user, and extraction candidate data corresponding to the history corresponding data are decided for each user, transmitted to a corresponding user terminal, and displayed on the display device of the user terminal on condition that the history corresponding data satisfies a specific transmission decision criterion. The history corresponding data in the information database is updated based on information about whether or not the thus displayed extraction candidate data were selected by the user. Also, when the thus updated history corresponding data satisfies a specific extraction decision criterion, the extraction candidate data corresponding to the history corresponding data are decided as extraction data for the user.

That is, based on the history in which the extraction candidate data have been selected by the user, the extraction candidate data to be displayed on the user terminal are decided, and the information about whether or not the thus displayed extraction candidate data were selected by the user is fed back to the history. Also, based on the thus updated history, extraction data for the user are decided.

As described above, by focusing attention to the repetitive behavior of the user relating to the selection of extraction candidate data, it is possible to know extraction candidate data the user actually remember or the user really wants.

The system, the device, the program, or the recording medium in which the program has been stored according to this invention is characterized in that the extraction decision criterion is equivalent to the condition that the extraction candidate data displayed on the display device of the user terminal have been selected n times (n ≥ 3) in a row by the user, and in that the transmission decision criterion is equivalent to the condition that the extraction candidate data are undisplayed data which have never been displayed on the display device of the user terminal or previous time selected data which were selected by the user last time when the data were displayed on the display device of the user terminal.

Therefore, extraction candidate data which were displayed on the display device of the user terminal but were not selected by the user are not displayed from the next time. Then, only extraction candidate data selected n times (n ≥ 3) in a row by the user are decided as the extraction data for the user. It is, therefore, possible to know extraction candidate data the user actually remember or the user really wants more reliably.

The system, the device, the program, or the recording medium in which the program has been stored according to this invention is characterized in that the transmission decision criterion is set such that the period from the (i+1)-th to (i+2)-th display on the display device of the user terminal is longer than the period from the i-th to (i+1)-th display under the condition that 1 ≥ i ≥ n - 2.

By displaying the selected extraction candidate data again before the period expires during which the memory of the selected extraction candidate data disappears and by gradually increasing the intervals between successive displays, disappearance of the memorized information can be prevented over a long period of time using the short-term memory function, intermediate-term memory function, and long-term memory function as functions of human brain effectively. Therefore, by promoting rememorization with attention focused on such functions, it is possible to enable a person to memorize given information more efficiently and to know the information the person actually remember.

The system, the device, the program, or the recording medium in which the program has been stored according to this invention is characterized in that when the extraction candidate data transmitted to the user terminal by the extraction candidate data deciding/transmitting means and displayed on the display device of the user terminal were not selected by the user, the history corresponding data updating means changes the history corresponding data corresponding to the extraction candidate data to data which are dealt with in substantially the same way as undisplayed data.

Therefore, when the extraction candidate data displayed on the display device of the user terminal were not selected by the user, even if the data have been selected many times in a row so far, the data are dealt with as having the number of times of selection of "0" from the next time before the data are selected n times (n ≥ 3) in a row. It is, therefore, possible to enable the user to memorize all the extraction candidate data reliably.

The system, the device, the program, or the recording medium in which the program has been stored according to this invention is characterized in that the data extraction supporting device and the user terminal communicate with each other through the information and communication network every predetermined time period, in that the extraction candidate data deciding/transmitting means reads extraction candidate data which satisfy the transmission decision criterion for the predetermined time period collectively and transmits the extraction candidate data to the user terminal, and in that the history corresponding data updating means receives information about whether or not the extraction candidate data transmitted to the user terminal and displayed on the display device of the user terminal were selected by the user for the predetermined time period collectively and updates the history corresponding data in the information database based on the received information.

Therefore, it is advantageous to equalize the shortest interval between when certain extraction candidate data are displayed on the user terminal and when the extraction candidate data are displayed next time to the above predetermined time period since unnecessary communication between the data extraction supporting device and the user terminal can be avoided.

The system, the device, the program, and the recording medium in which the program has been stored according to this invention is characterized in that the system further includes an administrator terminal which can communicate with the server computer through the information and communication network, and in that the data extraction supporting device has a transmission decision criterion setting means which sets the transmission decision criterion based on transmission decision criterion directing data transmitted from the administrator terminal and/or the user terminal.

Therefore, initial setting or changes in the middle of the process of the transmission decision criterion can be made from the administrator terminal and/or the user terminal. This is advantageous since the transmission decision criterion can be set as needed according to the conditions of the user.

Description has been made of the preferred embodiments of the present invention. The terminology employed herein is for the purpose of illustration but not of limitation. It should be understood that many changes and modification can be made within the scope of the appended claims without departing from the scope and spirit of the present invention.

## Claims

1. A data extraction supporting system, comprising: a plurality of user terminals each having a storage device, a display device, and an input device; and a server computer which can communicate with each user terminal through an information and communication network,
**characterized in that** the server computer functions as a data extraction supporting device which can access an information database for storing user identification data for identifying the user using a user terminal, extraction candidate data, and history corresponding data corresponding to the history in which the extraction candidate data have been selected by the user in association with one another, and
which has an extraction candidate data deciding/transmitting means for deciding extraction candidate data corresponding to the history corresponding data for each user, reading the extraction candidate data from the information database, and transmitting the extraction candidate data to a corresponding user terminal on condition that the history corresponding data satisfies a specific transmission decision criterion; a history corresponding data updating means for receiving information about whether or not the extraction candidate data transmitted to the user terminal by the extraction candidate data deciding/transmitting means and displayed on the display device of the user terminal were selected by the user, and updating the history corresponding data in the information database based on the received information; and an extraction data deciding means for deciding the extraction candidate data corresponding to the history corresponding data as extraction data for the user on condition that the history corresponding data updated by the history corresponding data updating means satisfies a specific extraction decision criterion.

2. A data extraction supporting device for use in a system having a plurality of user terminals each having a storage device, a display device, and an input device; and a data extraction supporting device which can communicate with each user terminal through an information and communication network,
**characterized in that** the data extraction supporting device can access an information database for storing user identification data for identifying the user using a user terminal, extraction candidate data, and history corresponding data corresponding to the history in which the extraction candidate data have been selected by the user in association with one another, and
has an extraction candidate data deciding/transmitting means for deciding extraction candidate data corresponding to the history corresponding data for each user, reading the extraction candidate data from the information database, and transmits the extraction candidate data to a corresponding user terminal on condition that the history corresponding data satisfies a specific transmission decision criterion; a history corresponding data updating means for receiving information about whether or not the extraction candidate data transmitted to the user terminal by the extraction candidate data deciding/transmitting means and displayed on the display device of the user terminal were selected by the user, and updating the history corresponding data in the information database based on the received information; and an extraction data deciding means for deciding the extraction candidate data corresponding to the history corresponding data as extraction data for the user on condition that the history corresponding data updated by the history corresponding data updating means satisfies a specific extraction decision criterion.

3. A program for causing a server computer for use in a system having a plurality of user terminals each having a storage device, a display device, and an input device and a server computer which can communicate with each user terminal through an information and communication network
to function as a data extraction supporting device which can access an information database for storing user identification data for identifying the user using a user terminal, extraction candidate data, and history corresponding data corresponding to the history in which the extraction candidate data have been selected by the user in association with one another, and
which has an extraction candidate data deciding/transmitting means for deciding extraction candidate data corresponding to the history corresponding data for each user, reading the extraction candidate data from the information database, and transmitting the extraction candidate data to a corresponding user terminal on condition that the history corresponding data satisfies a specific transmission decision criterion; a history corresponding data updating means which receives information about whether or not the extraction candidate data transmitted to the user terminal by the extraction candidate data deciding/transmitting means and displayed on the display device of the user terminal were selected by the user, and updates the history corresponding data in the information database based on the received information; and an extraction data deciding means for deciding the extraction candidate data corresponding to the history corresponding data as extraction data for the user on condition that the history corresponding data updated by the history corresponding data updating means satisfies a specific extraction decision criterion.

4. A recording medium wherein the program according to Claim 3 has been stored.

5. The system according to Claim 1,
**characterized in that** the extraction decision criterion is equivalent to the condition that the extraction candidate data displayed on the display device of the user terminal have been selected n times (n ≥ 3) in a row by the user, and
**in that** the transmission decision criterion is equivalent to the condition that the extraction candidate data are undisplayed data which have never been displayed on the display device of the user terminal or previous time selected data which were selected by the user last time when the data were displayed on the display device of the user terminal.

6. The system according to Claim 5,
**characterized in that** the transmission decision criterion is set such that the period from the (i+1)-th to (i+2)-th display on the display device of the user terminal is longer than the period from the i-th to (i+1)-th display under the condition that 1 ≥ i ≥ n - 2.

7. The system according to Claim 5,
**characterized in that** when the extraction candidate data transmitted to the user terminal by the extraction candidate data deciding/transmitting means and displayed on the display device of the user terminal were not selected by the user, the history corresponding data updating means changes the history corresponding data corresponding to the extraction candidate data to data which are dealt with in substantially the same way as undisplayed data.

8. The system according to Claim 1,
**characterized in that** the data extraction supporting device and the user terminal communicate with each other through the information and communication network every predetermined time period,
**in that** the extraction candidate data deciding/transmitting means reads extraction candidate data which satisfy the transmission decision criterion for the predetermined time period collectively and transmits the extraction candidate data to the user terminal, and
**in that** the history corresponding data updating means receives information about whether or not the extraction candidate data transmitted to the user terminal and displayed on the display device of the user terminal were selected by the user for the predetermined time period collectively and updates the history corresponding data in the information database based on the received information.

9. The system according to Claim 1,
**characterized in that** the system further includes an administrator terminal which can communicate with the server computer through the information and communication network, and **in that** the data extraction supporting device has a transmission decision criterion setting means which sets the transmission decision criterion based on transmission decision criterion directing data transmitted from the administrator terminal and/or the user terminal.

10. A data extraction supporting method carried out using a system having a plurality of user terminals each having a storage device, a display device, and an input device; and a server computer which can communicate with each user terminal through an information and communication network and which can access an information database for storing user identification data for identifying the user using a user terminal, extraction candidate data, and history corresponding data corresponding to the history in which the extraction candidate data have been selected by the user in association with one another, comprising:
an extraction candidate data deciding/transmitting step of deciding extraction candidate data corresponding to the history corresponding data for each user, reading the extraction candidate data from the information database, and transmitting the extraction candidate data to a corresponding user terminal on condition that the history corresponding data satisfies a specific transmission decision criterion;
a history corresponding data updating step of receiving information about whether or not the extraction candidate data transmitted to the user terminal in the extraction candidate data deciding/transmitting step and displayed on the display device of the user terminal were selected by the user, and updating the history corresponding data in the information database based on the received information; and
an extraction data deciding step of deciding the extraction candidate data corresponding to the history corresponding data as extraction data for the user on condition that the history corresponding data updated in the history corresponding data updating step satisfies a specific extraction decision criterion.

11. The device according to Claim 2,
**characterized in that** the extraction decision criterion is equivalent to the condition that the extraction candidate data displayed on the display device of the user terminal have been selected n times (n ≥ 3) in a row by the user, and
**in that** the transmission decision criterion is equivalent to the condition that the extraction candidate data are undisplayed data which have never been displayed on the display device of the user terminal or previous time selected data which were selected by the user last time when the data were displayed on the display device of the user terminal.

12. The device according to Claim 11,
**characterized in that** the transmission decision criterion is set such that the period from the (i+1)-th to (i+2)-th display on the display device of the user terminal is longer than the period from the i-th to (i+1)-th display under the condition that 1 ≥ i ≥ n - 2.

13. The device according to Claim 11,
**characterized in that** when the extraction candidate data transmitted to the user terminal by the extraction candidate data deciding/transmitting means and displayed on the display device of the user terminal were not selected by the user, the history corresponding data updating means changes the history corresponding data corresponding to the extraction candidate data to data which are dealt with in substantially the same way as undisplayed data.

14. The device according to Claim 2,
**characterized in that** the data extraction supporting device and the user terminal communicate with each other through the information and communication network every predetermined time period,
**in that** the extraction candidate data deciding/transmitting means reads extraction candidate data which satisfy the transmission decision criterion for the predetermined time period collectively and transmits the extraction candidate data to the user terminal, and
**in that** the history corresponding data updating means receives information about whether or not the extraction candidate data transmitted to the user terminal and displayed on the display device of the user terminal were selected by the user for the predetermined time period collectively and updates the history corresponding data in the information database based on the received information.

15. The device according to Claim 2,
**characterized in that** the system further includes an administrator terminal which can communicate with the server computer through the information and communication network, and **in that** the data extraction supporting device has a transmission decision criterion setting means which sets the transmission decision criterion based on transmission decision criterion directing data transmitted from the administrator terminal and/or the user terminal.

16. The program according to Claim 3,
**characterized in that** the extraction decision criterion is equivalent to the condition that the extraction candidate data displayed on the display device of the user terminal have been selected n times (n ≥ 3) in a row by the user, and
**in that** the transmission decision criterion is equivalent to the condition that the extraction candidate data are undisplayed data which have never been displayed on the display device of the user terminal or previous time selected data which were selected by the user last time when the data were displayed on the display device of the user terminal.

17. The program according to Claim 16,
**characterized in that** the transmission decision criterion is set such that the period from the (i+1)-th to (i+2)-th display on the display device of the user terminal is longer than the period from the i-th to (i+1)-th display under the condition that 1 ≥ i ≥ n - 2.

18. The program according to Claim 16,
**characterized in that** when the extraction candidate data transmitted to the user terminal by the extraction candidate data deciding/transmitting means and displayed on the display device of the user terminal were not selected by the user, the history corresponding data updating means changes the history corresponding data corresponding to the extraction candidate data to data which are dealt with in substantially the same way as undisplayed data.

19. The program according to Claim 3,
**characterized in that** the data extraction supporting device and the user terminal communicate with each other through the information and communication network every predetermined time period,
**in that** the extraction candidate data deciding/transmitting means reads extraction candidate data which satisfy the transmission decision criterion for the predetermined time period collectively and transmits the extraction candidate data to the user terminal, and
**in that** the history corresponding data updating means receives information about whether or not the extraction candidate data transmitted to the user terminal and displayed on the display device of the user terminal were selected by the user for the predetermined time period collectively and updates the history corresponding data in the information database based on the received information.

20. The program according to Claim 3,
**characterized in that** the system further includes an administrator terminal which can communicate with the server computer through the information and communication network, and **in that** the data extraction supporting device has a transmission decision criterion setting means which sets the transmission decision criterion based on transmission decision criterion directing data transmitted from the administrator terminal and/or the user terminal.
